# FASCICULE DE BREVET EUROPEEN

(11) **EP 3 580 469 B1**
(45) Date de publication et mention de la délivrance du brevet: **14.05.2025**
(21) Numéro de dépôt: 18703587.8
(22) Date de dépôt: 06.02.2018
(51) Int. Cl.: F16D 21/06, F16D 13/74

(54) **SUPPORT D'EMBRAYAGE**
KUPPLUNGSTRÄGER
CLUTCH SUPPORT

(30) Priorité: 07.02.2017 FR 1750992; 31.08.2017 FR 1758050; 31.08.2017 FR 1758052
(43) Date de publication de la demande: 18.12.2019
(73) Titulaire: Valeo Embrayages, 80009 Amiens Cedex 2 (FR)
(72) Inventeur: DOLE, Arnaud, 80009 Amiens (FR); THIBAUT, François, 80009 Amiens (FR)
(74) Mandataire: Valeo Powertrain Systems
(86) Numéro de dépôt international: PCT/EP2018/052929
(87) Numéro de publication internationale: WO 2018/146087

(56) Documents cités:
- EP-A2- 2 161 466
- DE-A1- 102011 014 778
- FR-A1- 3 024 508

## Description

### Domaine technique

La présente invention concerne un support d'embrayage pour un mécanisme à double embrayages démontable tel qu'utilisé dans le domaine de l'automobile. L'invention concerne aussi un mécanisme à double embrayage et un système de transmission intégrant un tel support.

### État de la technique antérieure

Les mécanismes d'embrayages comprennent un grand nombre d'éléments qu'il convient d'assembler avec soin. Les développements récents n'ont eu de cesse que de chercher à réduire les dimensions des mécanismes d'embrayage, réduisant toujours plus les espaces disponibles pour réaliser leur assemblage et leur montage sur une transmission d'un véhicule automobile, et plus particulièrement sur un carter de boite de vitesses.

De manière connue, les mécanismes d'embrayages comprennent généralement un premier sous-ensemble comportant au moins un embrayage associé aux éléments qui permettent de le mettre en œuvre, et un deuxième sous-ensemble qui comporte au moins un actionneur permettant de configurer l'embrayage dans sa configuration embrayée ou débrayée. Le document DE102011014778A1 décrit ainsi l'assemblage d'un module d'actionnement avec un dispositif à double embrayage.

Selon un premier type d'architecture connue, le premier et le deuxième sous-ensemble de tels mécanismes d'embrayages peuvent être assemblés par des moyens de fixation « internes » aux mécanismes d'embrayages afin de former un module ; et le module ainsi formé est ensuite monté sur la transmission par des moyens de fixation « externes » aux mécanismes d'embrayages. Cette configuration permet avantageusement de faciliter les opérations de maintenance sur les mécanismes d'embrayages en facilitant leur remplacement : il suffit de manipuler les moyens de fixation « externes » pour désolidariser le mécanisme d'embrayage de la transmission sur laquelle il était monté. Selon un deuxième type d'architecture connue, le premier et le deuxième sous-ensemble de tels mécanismes d'embrayages peuvent être assemblés et montés l'un après l'autre sur la transmission, sans assemblage préalable.

Dans les deux types d'architecture, un inconvénient des mécanismes d'embrayage connus est qu'il n'est pas facile de les assembler. Par exemple, une partie de l'huile de lubrification servant à lubrifier les mécanismes d'embrayages peut fuir hors desdits mécanismes d'embrayages par les ouvertures plutôt que de migrer en direction du ou des embrayages. De plus, il n'est pas toujours aisé d'atteindre les moyens de fixation avec l'outil correspondant pour le montage et/ou le démontage des mécanismes d'embrayages.

La présente invention a pour objet de répondre au moins en grande partie aux problèmes précédents et de conduire en outre à d'autres avantages en proposant un nouveau support d'embrayage pour mécanisme à double embrayage. Un autre but de l'invention est d'améliorer la lubrification d'un tel mécanisme à double embrayages c'est-à-dire de faciliter le transport du flux de refroidissement de la pompe jusque dans les frictions.

### Exposé de l'invention

Selon un premier aspect de l'invention, on atteint au moins l'un des objectifs précités avec un support d'embrayage selon la revendication 1.

De préférence, le support d'embrayage est agencé pour supporter un premier embrayage et un deuxième embrayage.

Le conduit présente en particulier au moins un orifice d'entrée du fluide hydraulique, par exemple plusieurs orifices d'entrée.

Le fluide hydraulique est fournit par une pompe hydraulique en particulier localisée côté système d'actionnement. Plus précisément le fluide est fournit depuis le côté boite de vitesses. Ledit système d'actionnement est notamment agencé pour configurer le ou les premiers embrayages entre une configuration embrayée et une configuration débrayée

En particulier, le conduit peut être compris dans le support d'embrayage, par exemple en formant un alésage traversant au moins une partie dudit support d'embrayage, ou en formant au moins en partie une gorge sur une face périphérique au support d'embrayage. Autrement dit, le conduit du support d'embrayage peut être au moins en partie ouvert latéralement. Dans ce cas, le conduit peut alors être délimité conjointement par le support d'embrayage et une autre pièce constitutive du mécanisme d'embrayage, telle que par exemple le palier support ou le carter du système d'actionnement.

La partie radiale du conduit peut en particulier être ouverte latéralement. Alternativement ou en complément, la partie annulaire peut être ouverte, notamment ouverte vers l'intérieur, c'est à dire vers un axe longitudinal du support d'embrayage.

La partie annulaire du conduit peut être située dans une partie d'extension axiale du support d'embrayage, selon les variantes du même côté ou du côté opposé à l'organe de fixation. La partie annulaire du conduit est par exemple située radialement à l'intérieur de la partie axiale du support d'embrayage.

La partie annulaire du conduit peut être située à une extrémité axiale du support d'embrayage.

Le conduit peut comprendre au moins une partie d'extension axiale et au moins une partie d'extension radiale. Par partie d'extension radiale, on entend dans le cadre de la présente invention, une partie formant avec une direction parallèle à l'axe d'élongation du support d'embrayage un angle non nul. Ladite partie d'extension radiale peut en particulier être en tout ou partie perpendiculaire à l'axe d'élongation du support d'embrayage (90°).

Ladite partie d'extension radiale du conduit peut comporter en complément ou alternativement au moins une partie d'extension inclinée, c'est-à-dire formant avec une direction parallèle à l'axe d'élongation du support d'embrayage un angle strictement compris entre 0 et 90°.

L'orifice de sortie du conduit, notamment de la partie d'extension radiale du conduit ou de la partie d'extension axiale du conduit, prend la forme d'un trou débouchant situé sur une face extérieure du support d'embrayage, permettant une communication fluidique entre le conduit et un espace situé radialement à l'extérieur du support d'embrayage, dans le module d'embrayage. Le fluide hydraulique circulant à l'intérieur du conduit du support d'embrayage est ainsi projeté en direction du ou des embrayages au travers de l'orifice de sortie afin de lubrifier et/ou de refroidir notamment les premier et deuxième embrayages. Dans le sens de l'invention, un orifice de sortie est défini comme étant une ouverture située sur la face extérieure du support d'embrayage et qui donne notamment accès à la partie d'extension radiale du conduit, permettant de faire communiquer le conduit, par exemple ladite partie d'extension radiale ou ladite partie d'extension axiale, respectivement ladite partie d'extension inclinée, avec l'espace situé radialement à l'extérieur du support d'embrayage, dans le module d'embrayage.

Dans la suite de la description et dans les revendications, on utilisera à titre non limitatif et afin d'en faciliter la compréhension, les termes :
- « avant » ou « arrière » selon la direction par rapport à une orientation axiale déterminée par l'axe O principal de rotation du module d'embrayage, « l'arrière » désignant la partie située à droite des figures, du côté de la transmission, et « l'avant » désignant la partie gauche des figures, du côté du moteur ; et
- « intérieur / interne » ou « extérieur / externe » par rapport à l'axe O et suivant une orientation radiale, orthogonale à ladite orientation axiale, « l'intérieur » désignant une partie proximale de l'axe O et « l'extérieur » désignant une partie distale de l'axe O.

Le support d'embrayage conforme au premier aspect de l'invention peut comprendre avantageusement au moins un des perfectionnements ci-dessous, les caractéristiques techniques formant ces perfectionnements pouvant être prises seules ou en combinaison :
- le conduit comporte une pluralité d'orifices d'entrée et/ou une pluralité d'orifices de sortie, lesdits orifices d'entrée, respectivement orifices de sortie étant préférentiellement angulairement régulièrement réparties autour d'un axe longitudinal du support d'embrayage, notamment confondu avec l'axe de rotation du mécanisme à double embrayage ;
- le support d'embrayage est réalisé en une seule pièce;
- le support d'embrayage est réalisé en au-moins deux parties ;
- le support d'embrayage est réalisé au moins en partie en un matériau choisi parmi : l'acier, l'aluminium, un matériau fritté, un matériau plastique ;
- le support d'embrayage comporte un palier support, notamment pour supporter radialement le ou les embrayages.

Selon un autre aspect, l'invention a pour objet, un assemblage d'un support d'embrayage tel que décrit et d'un organe de fixation configuré pour permettre de fixer le support d'embrayage sur un carter du système d'actionnement.

Selon encore un autre aspect, l'invention a pour objet, un module d'embrayage comprenant :
- un premier embrayage en rotation autour d'un axe de rotation ;
- un deuxième embrayage en rotation autour de l'axe de rotation ;
- un support d'embrayage tel que décrit précédemment ;
- un organe de fixation du module d'embrayage.
L'organe de fixation est configuré pour permettre de fixer le module d'embrayage sur le carter du système d'actionnement. Le système d'actionnement est notamment agencé pour configurer les premier et deuxième embrayages entre une configuration embrayée et une configuration débrayée.

L'organe de fixation et /ou le module d'embrayage peuvent comprendre avantageusement au moins un des perfectionnements ci-dessous, les caractéristiques techniques formant ces perfectionnements pouvant être prises seules ou en combinaison :
- l'organe de fixation est situé radialement à l'intérieur d'au moins un palier axial séparant un premier porte-disques de sortie couplé au premier embrayage d'un deuxième porte-disques de sortie couplé au deuxième embrayage ;
- l'organe de fixation est situé à une extrémité axiale du support d'embrayage afin de faciliter son accès lors des opérations de montage ou de démontage sur la transmission. Préférentiellement, l'organe de fixation est situé au niveau de l'extrémité avant du support d'embrayage. Avantageusement encore, l'accès à l'organe de fixation est situé à une extrémité axiale du support d'embrayage, par exemple au niveau de l'extrémité avant du support d'embrayage ;
- l'organe de fixation est situé du côté opposé au palier support par rapport au système d'actionnement afin de faciliter son accès lors des opérations de montage ou de démontage sur la transmission. Avantageusement encore, l'accès à l'organe de fixation est situé du côté opposé au palier support par rapport au système d'actionnement ;
- l'organe de fixation est en appui contre une face avant du support d'embrayage afin de faciliter son accès lors des opérations de montage ou de démontage sur la transmission ;
- le module d'embrayage comprend un voile d'entrée destiné à être couplé en rotation à un arbre d'entrée du moteur, un premier porte-disques de sortie couplé en rotation au premier embrayage et un deuxième porte-disques de sortie couplé en rotation au deuxième embrayage, ledit voile d'entrée et lesdits premier et deuxième porte-disques de sortie comprenant chacun au moins une ouverture axiale située en regard de l'organe de fixation et formant l'accès audit organe de fixation. En particulier, une dimension radiale des ouvertures peut être supérieure à un diamètre extérieur de l'organe de fixation afin de pouvoir accéder plus facilement audit organe de fixation ;
- un diamètre d'une face extérieure de chaque ouverture axiale est supérieur à un diamètre extérieur de l'organe de fixation afin de faciliter l'accès et/ou la manipulation de l'organe de fixation ;
- les ouvertures axiales permettent de configurer l'organe de fixation dans une première configuration dans laquelle ledit organe de fixation établit une liaison mécanique avec le système d'actionnement et une deuxième configuration dans laquelle il est possible de libérer le module d'embrayage du système d'actionnement ;
- les ouvertures axiales sont situées en regard d'une zone d'actionnement de l'organe de fixation afin de faciliter l'accès et/ou la manipulation de l'organe de fixation ;
- l'organe de fixation est configuré pour réaliser un blocage axial du module d'embrayage sur le carter du système d'actionnement, permettant ainsi de solidariser de manière non définitive le module d'embrayage sur le système d'actionnement. Une fois ainsi assemblé, le module d'embrayage forme un module facilement manipulable. Ledit module peut ensuite, par exemple, être assemblé plus facilement sur le système d'actionnement et/ou monté plus facilement sur une transmission. En outre, cette configuration avantageuse permet de pouvoir démonter rapidement le module d'embrayage conforme au premier aspect de l'invention du système d'actionnement et/ou de la transmission, en limitant le nombre et la difficulté des opérations de démontage ;
- l'organe de fixation est du type d'un anneau de blocage axial permettant de réaliser un blocage axial du module d'embrayage sur le carter du système d'actionnement ;
- l'organe de fixation est logé dans une gorge circulaire interrompue ou non de la face avant du support d'embrayage afin de faciliter son pré-assemblage sur le module d'embrayage, et plus particulièrement son centrage par rapport à l'axe de rotation du module d'embrayage conforme au premier aspect de l'invention ;
- l'organe de fixation est du type d'anneau élastique délimité par un contour intérieur et un contour extérieur, le diamètre intérieur pouvant être déformé radialement. Cette configuration avantageuse permet ainsi à l'organe de fixation de pouvoir prendre la première configuration radiale dans laquelle il est configuré pour pouvoir collaborer avec le carter du système d'actionnement afin d'établir une liaison mécanique entre le module d'embrayage et ledit carter, préférentiellement via un blocage axial tel que décrit précédemment. Cette configuration avantageuse permet aussi à l'organe de fixation de pouvoir prendre la deuxième configuration radiale dans laquelle il est configuré pour ne plus collaborer avec le carter du système d'actionnement afin de libérer le module d'embrayage dudit carter. De manière avantageuse, la première configuration et/ou la deuxième configuration de l'organe de fixation correspond à une déformation radiale dudit organe de fixation, dans laquelle le contour intérieur et/ou le contour extérieur sont déformés afin de collaborer simultanément avec le module d'embrayage d'une part - et préférentiellement le support d'embrayage - et le système d'actionnement d'autre part ;
- le support d'embrayage comporte des moyens de retenue axiale de l'organe de fixation afin de faciliter son pré-assemblage sur le support d'embrayage, lesdits moyens de retenue axiale délimitant au moins en partie la gorge en particulier la gorge circulaire ;
- les moyens de retenue axiale sont issus de matière avec le support d'embrayage. Alternativement, des moyens de retenue axiale sont rapportés et fixés au support d'embrayage. Dans ce mode de réalisation, les moyens de retenu axiales sont fixés sur le support d'embrayage selon tout moyens connus, et notamment par soudage et/ou par vissage. Les moyens de retenue axiale peuvent former un surmoulage de l'organe de fixation sur le support d'embrayage. Les moyens de retenue axiale sont configurés pour permettre, le cas échéant, à l'organe de fixation de pouvoir prendre l'une ou l'autre de ses configurations afin de pouvoir lier le module d'embrayage au système d'actionnement ou afin de pouvoir les libérer ;
- les moyens de retenue axiale sont angulairement régulièrement répartis autour de l'axe de rotation afin de rendre plus stable le pré-assemblage de l'organe de fixation sur le support d'embrayage ;
- selon une première variante de réalisation, les moyens de retenue axiale comprennent au moins deux brides agencées pour bloquer axialement l'organe de fixation contre le support d'embrayage. Chaque bride peut avantageusement prendre la forme d'un secteur angulaire recouvrant au moins partiellement l'organe de fixation ;
- selon une deuxième variante de réalisation, les moyens de retenue axiale prennent la forme d'une plaque annulaire agencée pour former, en collaboration avec la face avant du support d'embrayage, un logement pour l'organe de fixation, ledit organe de fixation étant pris axialement entre la plaque annulaire et la face avant du support d'embrayage, la plaque annulaire comprenant au moins une ouverture sectorielle permettant l'accès à l'organe de fixation.

Selon un autre aspect de l'invention, il est proposé un mécanisme à double embrayage comprenant un module d'embrayage tel que l'un décrit précédemment et un système d'actionnement comprenant :
- un premier actionneur agencé pour se déplacer axialement afin d'embrayer ou de débrayer le premier embrayage ;
- un deuxième actionneur agencé pour se déplacer axialement afin d'embrayer ou de débrayer le deuxième embrayage ;
- un carter logeant le premier et le deuxième actionneur, ledit carter comprenant un canal permettant à un fluide hydraulique de circuler, ledit canal étant agencé pour collaborer avec le conduit afin de permettre une circulation fluidique du fluide hydraulique entre le conduit et le canal. Le canal comprend par exemple une partie d'extension axiale agencée pour collaborer avec le conduit, en particulier avec la partie annulaire du conduit. Le canal du carter peut en variante coopérer avec la partie d'extension axiale ou la partie d'extension radiale du conduit..

De manière avantageuse, le mécanisme à double embrayages conforme à l'invention peut comprendre avantageusement au moins un des perfectionnements ci-dessous, les caractéristiques techniques formant ces perfectionnements pouvant être prises seules ou en combinaison :
- le carter du système d'actionnement comprend une portée d'élongation axiale qui s'étend axialement en avant des premier et deuxième actionneurs, la portée d'élongation axiale étant agencée pour collaborer avec le support d'embrayage. La portée d'élongation axiale du système d'actionnement s'étend axialement en direction du module d'embrayage. Plus particulièrement, la portée d'élongation axiale s'étend en direction du support d'embrayage afin de collaborer avec lui. La collaboration entre le support d'embrayage et la portée d'élongation axiale du carter peut prendre la forme d'un épaulement radial afin notamment de réaliser un centrage par rapport à l'axe de rotation du mécanisme à double embrayages conforme au deuxième aspect de l'invention du module d'embrayage - par l'intermédiaire du support d'embrayage - sur le système d'actionnement - par l'intermédiaire du carter. À cet effet, une portée cylindrique intérieure du support d'embrayage peut être en appui radial contre une face extérieure de la portée d'élongation axiale du carter, ladite portée d'élongation axiale étant située radialement à l'intérieur dudit support d'embrayage. Alternativement, une face intérieure de la portée d'élongation axiale du carter peut être en appui radial contre une face extérieure du support d'embrayage, ladite portée d'élongation axiale étant située radialement à l'extérieur dudit support d'embrayage ;
- selon une première variante de réalisation, la portée d'élongation axiale du carter est issue de matière avec ledit carter. Selon une deuxième variante de réalisation, la portée d'élongation axiale du carter est rapportée sur ledit carter et fixée solidairement au carter par tout moyen de fixation connu, tel que par exemple par soudage, par goupillage, par emmanchement, préférentiellement en force, ou encore par encliquetage. Dans la première variante de réalisation, la portée d'élongation axiale du carter peut être formée du même matériau que ledit carter ou dans un matériau différent. En particulier, la portée d'élongation axiale du carter est avantageusement formée d'acier ou d'un alliage comprenant de l'acier ;
- la portée d'élongation axiale du carter comprend une gorge notamment circonférentielle agencée pour pouvoir loger en partie l'organe de fixation. La gorge du carter, notamment circonférentielle, est agencée pour pouvoir participer à la fixation du module d'embrayage sur le système d'actionnement, en collaboration avec l'organe de fixation ;
- une face intérieure de la gorge circonférentielle a un diamètre supérieur ou égal au diamètre du contour intérieur de l'organe de fixation, avantageusement lorsque ledit organe de fixation est configuré pour fixer le module d'embrayage au système d'actionnement. Cette configuration avantageuse permet à l'organe de fixation de s'insérer radialement dans la gorge circonférentielle et d'y demeurer pour fixer de manière durable et non définitive le module d'embrayage sur le système d'actionnement ;
- la portée d'élongation axiale du carter comprend une extrémité située du côté opposé aux actionneurs du système d'actionnement par rapport à la gorge circonférentielle, ladite extrémité ayant une face extérieure de diamètre inférieur ou égal au diamètre du contour intérieur de l'organe de fixation, avantageusement lorsque ledit organe de fixation n'est pas configuré pour fixer le module d'embrayage au système d'actionnement ;
- l'extrémité de la portée d'élongation axiale prend la forme d'une surface conique dont un diamètre décroît en s'éloignant de la gorge circonférentielle afin de générer une déformation radiale de l'organe de fixation, et plus particulièrement une déformation radiale du contour intérieur dudit organe de fixation ;
- à une extrémité distale de la gorge circonférentielle, le diamètre de la face conique est inférieur au diamètre du contour intérieur de l'organe de fixation afin de faciliter l'assemblage du module d'embrayage sur le système d'actionnement ;
- un diamètre d'une face intérieure du support d'embrayage est supérieur ou égal à un diamètre extérieur de la portée d'élongation axiale du carter, de sorte que ladite portée d'élongation axiale est emmanchée en force dans le support d'embrayage ;
- le mécanisme à double embrayages conforme à l'invention comprend des moyens de couplage en rotation du carter au support d'embrayage. Selon une première variante de réalisation, les moyens de couplage en rotation comprennent des premières cannelures situées sur la portée d'élongation axiale du carter et collaborant par engagement de formes complémentaires avec des deuxièmes cannelures situées sur le support d'embrayage du module d'embrayage. Les premières cannelures peuvent être du type mâle et les deuxièmes cannelures peuvent être du type femelle, ou les premières cannelures peuvent être du type femelle et les deuxièmes cannelures peuvent être du type mâle. Selon une deuxième variante de réalisation, les moyens de couplage en rotation comprennent une clavette située sur le carter du système d'actionnement ou sur le support d'embrayage du module d'embrayage et collaborant avec un logement correspondant situé respectivement sur le support d'embrayage ou sur le carter ;
- le mécanisme à double embrayages conforme au deuxième aspect de l'invention est du type multidisques fonctionnant dans un environnement humide.

Selon une première variante de réalisation, le premier embrayage et le deuxième embrayage sont disposés dans une configuration radiale, le premier embrayage étant situé radialement à l'extérieur du deuxième embrayage. Selon une deuxième variante de réalisation, le premier embrayage et le deuxième embrayage sont disposés dans une configuration axiale, le premier embrayage étant situé radialement en avant du deuxième embrayage.

Selon un autre aspect de l'invention, il est proposé un système de transmission pour véhicule automobile comprenant un mécanisme à double embrayages tel que décrit précédemment et dans lequel :
- le premier embrayage est couplé en rotation à un premier arbre de sortie de la transmission par l'intermédiaire d'un premier porte-disques d'entrée ;
- le deuxième embrayage est couplé en rotation à un deuxième arbre de sortie de la transmission par l'intermédiaire d'un deuxième porte-disques d'entrée ;
- le premier et le deuxième embrayages sont alternativement couplés en rotation à un voile d'entrée, ledit voile d'entrée étant couplé en rotation à un arbre d'entrée entrainé en rotation par au moins un vilebrequin.

Selon un autre aspect de l'invention, il est également proposé un procédé d'assemblage réversible d'un mécanisme à double embrayages, ledit procédé d'assemblage comprenant les étapes suivantes :
- une étape de montage de l'organe de fixation sur le support d'embrayage ;
- une étape d'assemblage du module d'embrayage ;
- une étape de centrage du module d'embrayage sur carter du système d'actionnement par rapport à l'axe de rotation ;
- une étape de translation relative du module d'embrayage par rapport au système d'actionnement afin de rapprocher ledit module d'embrayage dudit système d'actionnement ;
- une étape de blocage axial du module d'embrayage au système d'actionnement.

Selon un autre des aspects de l'invention, il est proposé un procédé de désassemblage non destructif d'un mécanisme à double embrayages, ledit procédé de désassemblage comprenant les étapes suivantes :
- une étape de configuration de l'organe de fixation de manière pouvoir libérer le module d'embrayage du système d'actionnement ;
- une étape de séparation du module d'embrayage et du système d'actionnement.

Des modes de réalisation variés de l'invention sont prévus, intégrant selon l'ensemble de leurs combinaisons possibles les différentes caractéristiques optionnelles exposées ici.

### Description des figures

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
- la FIGURE 1A illustre une vue en coupe axiale d'un exemple de réalisation du mécanisme à double embrayages conforme à l'invention ;
- la FIGURE 1B illustre une vue en coupe axiale d'un autre exemple de réalisation de mécanisme à double embrayages ne faisant pas partie de l'invention ;
- les FIGURES 2A et 2B illustrent des vues en coupe d'un organe de fixation préassemblé sur un support d'embrayage selon deux variantes de réalisation d'un assemblage selon l'invention;
- les FIGURES 3A, 3B et 3C illustrent des vues d'un organe de fixation préassemblé sur un support d'embrayage selon la variante de la FIGURE 2A ;
- les FIGURES 3D à 3F illustrent différentes vues d'une variante d'organe de fixation selon l'invention ;
- les FIGURES 4A, 4B, 4C, 5A, 5B, 5C et 5D illustrent en vues de profils divers stades d'assemblage du mécanisme à double embrayages illustré sur la FIGURE 1A.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

### Description détaillée de l'invention

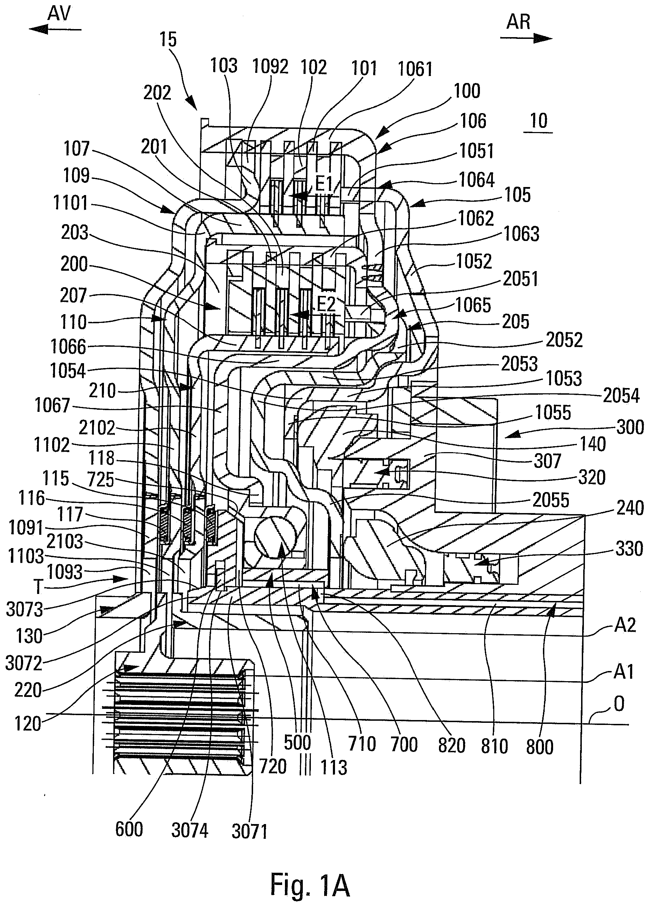

En référence à la FIGURE 1A, l'exemple de réalisation illustré d'un mécanisme à double embrayages 10 conforme à l'invention est préférentiellement du type à double embrayage humide, et comprend un premier embrayage 100 et un deuxième embrayage 200. Préférentiellement encore, dans une position dite radiale, le premier embrayage 100 est situé à l'extérieur du deuxième embrayage 200. Alternativement, le mécanisme à double embrayages 10 peut être dans une configuration dite axiale, le premier embrayage 100 étant situé devant le deuxième embrayage 200. Le mécanisme à double embrayages 10 est destiné à être intégré sur une chaine de transmission comprenant une transmission couplée en rotation au mécanisme à double embrayages 10.

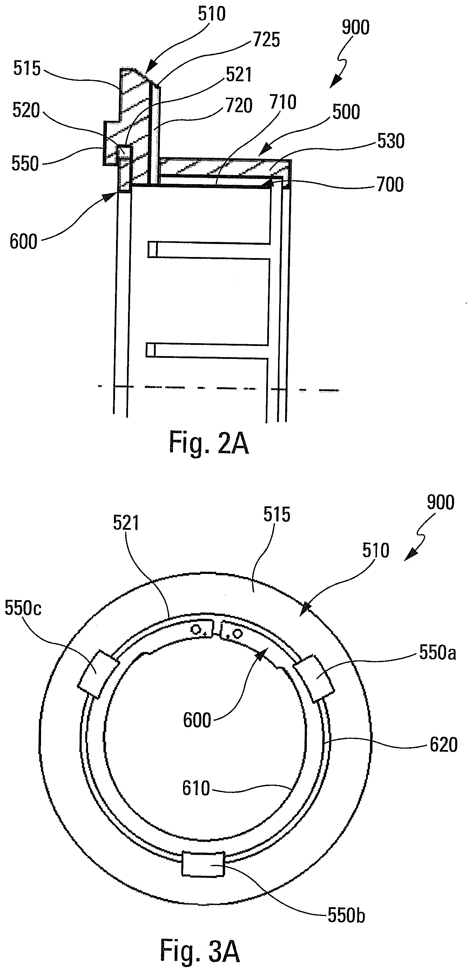

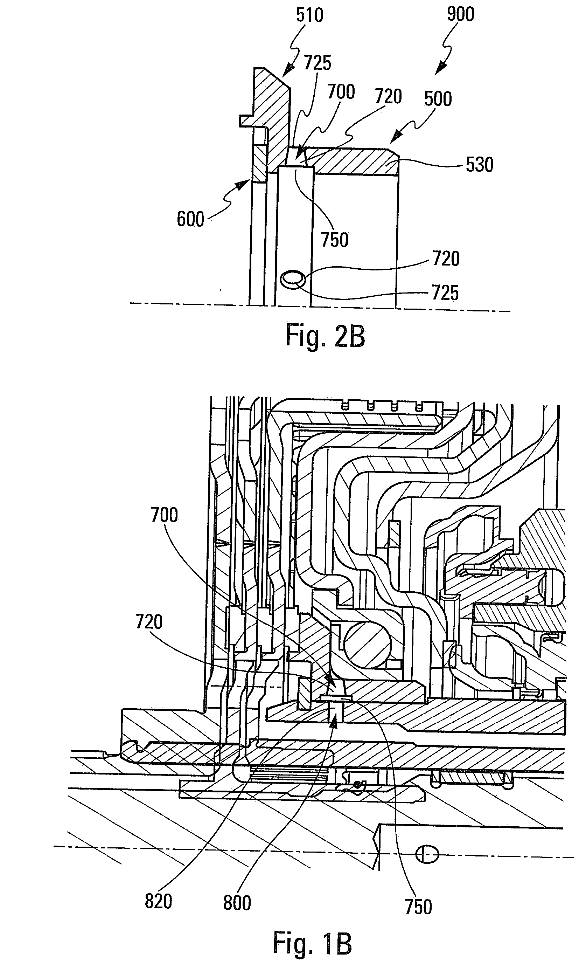

Selon l'invention, le premier embrayage 100 et le deuxième embrayage 200 sont supportés par un support d'embrayage 500 délimitant un conduit 700 permettant à un fluide hydraulique de circuler depuis un système d'actionnement 300 vers les embrayages. Le conduit 700 comporte au moins une partie d'extension radiale 720 et présente au moins un orifice 725 de sortie du fluide vers les embrayages. Le support d'embrayage 500 sera plus particulièrement décrit ultérieurement, notamment en lien avec un organe de fixation 600 avec lequel il forme un assemblage 900. Différentes variantes d'assemblage 900 sont illustrées sur les FIGURES 2A et 2B et 3A à 3C.

D'une manière générale, le mécanisme à double embrayages 10 est agencé pour pouvoir coupler en rotation un arbre d'entrée, non représenté, à un premier arbre de transmission A1 ou alternativement à un deuxième arbre de transmission A2 par l'intermédiaire respectivement du premier embrayage 100 ou du deuxième embrayage 200.

Dans le contexte de l'invention, l'arbre d'entrée est entrainé en rotation par au moins un vilebrequin d'un moteur, par exemple un moteur thermique ; et les premier et deuxième arbres de transmission A1, A2 sont destinés à être couplés en rotation à la transmission, telle que par exemple une boite de vitesses du type de celles équipant des véhicules automobiles.

De préférence, le premier arbre de transmission A1 et le deuxième arbre de transmission A2 sont coaxiaux. Plus particulièrement, le deuxième arbre de transmission A2 prend éventuellement la forme d'un cylindre creux à l'intérieur duquel le premier arbre de transmission A1 peut être inséré.

Comme illustré sur la FIGURE 1A, le premier embrayage 100 et le deuxième embrayage 200 sont avantageusement du type multidisques. Chaque embrayage multidisques comprend d'une part une pluralité de premiers éléments de friction 101, 201, tels que par exemple des flasques, liés solidairement en rotation à l'arbre d'entrée, et d'autre part une pluralité de deuxièmes éléments de friction 102, 202, tels que par exemples des disques de friction, liés solidairement en rotation à au moins l'un des arbres de transmission A1, A2.

Éventuellement, la pluralité de premiers éléments de friction 101, 201 consiste en des disques de friction liés solidairement en rotation à l'arbre d'entrée, et la pluralité de deuxièmes éléments de friction 102, 202 consiste en des flasques liées solidairement en rotation à au moins l'un des arbres de transmission A1, A2.

Le premier arbre de transmission A1 est couplé en rotation à l'arbre d'entrée. Le premier arbre de transmission A1 est entraîné par l'arbre d'entrée en rotation lorsque le premier embrayage 100 est configuré dans une position dite embrayée pour laquelle la pluralité de premiers éléments de friction 101 est couplée en rotation à la pluralité de deuxièmes éléments de friction 102. Alternativement, le premier arbre de transmission A1 est découplé en rotation de l'arbre d'entrée lorsque le premier embrayage 100 est configuré dans une position dite débrayée pour laquelle la pluralité de premiers éléments de friction 101 est découplée en rotation à la pluralité de deuxièmes éléments de friction 102.

De manière analogue, le deuxième arbre de transmission A2 est couplé en rotation à l'arbre d'entrée. Le deuxième arbre de transmission A2 est entraîné par l'arbre d'entrée en rotation lorsque le deuxième embrayage 200 est configuré dans une position embrayée pour laquelle la pluralité de premiers éléments de friction 201 est couplée en rotation à la pluralité de deuxièmes éléments de friction 202. Alternativement, le deuxième arbre de transmission A2 est découplé en rotation de l'arbre d'entrée lorsque le deuxième embrayage 200 est configuré dans une position dite débrayée pour laquelle la pluralité de premiers éléments de friction 201 est découplée en rotation à la pluralité de deuxièmes éléments de friction 202.

Dans le mécanisme à double embrayages 10 illustré sur la FIGURE 1A, le premier embrayage 100 est agencé pour engager les rapports impairs de la transmission et le deuxième embrayage 200 est agencé pour engager les rapports pairs et la marche arrière de la transmission. Alternativement, les rapports pris en charge par lesdits premier embrayage 100 et deuxième embrayage 200 peuvent être respectivement inversés.

Le premier embrayage 100 et le deuxième embrayage 200 sont agencés pour transmettre alternativement une puissance dite d'entrée - un couple et une vitesse de rotation - de l'arbre d'entrée, à l'un des deux arbres de transmission A1, A2, en fonction de la configuration respective de chaque embrayage 100 et 200 et par l'intermédiaire d'un voile d'entrée 109.

Le premier embrayage 100 et le deuxième embrayage 200 sont agencés pour ne pas être simultanément dans la même configuration embrayée. En revanche, le premier embrayage 100 et le deuxième embrayage 200 peuvent simultanément être configurés dans leur position débrayée.

Le mécanisme à double embrayages 10 comprend un élément d'entrée qui est couplé en rotation d'une part à l'arbre d'entrée et d'autre part au voile d'entrée 109 afin de transmettre la puissance - le couple et la vitesse de rotation - générée au niveau du moteur à l'un des embrayages 100, 200 du mécanisme à double embrayages 10. De préférence, l'élément d'entrée du mécanisme à double embrayages 10 comprend un moyeu d'entrée 130, préférentiellement en rotation autour de l'axe longitudinal O. Le moyeu d'entrée 130 comporte une première élongation inférieure qui est liée en rotation et/ou axialement à l'arbre d'entrée, éventuellement par l'intermédiaire d'un dispositif d'amortissement, tel qu'un double volant amortisseur par exemple.

Le moyeu d'entrée 130 comprend une élongation extérieure qui est couplée au voile d'entrée 109, et plus particulièrement à une extrémité inférieure 1091 du voile d'entrée 109. L'extrémité inférieure 1091 est située vers l'avant AV dudit voile d'entrée 109. Préférentiellement, le voile d'entrée 109 et le moyeu d'entrée 130 sont solidaires, par exemple fixés par soudage et/ou par rivetage.

Le voile d'entrée 109 comporte une extrémité supérieure 1092 par laquelle le voile d'entrée 109 est lié en rotation au premier embrayage 100, et plus particulièrement au niveau des premiers éléments de friction 101 du premier embrayage 100. Cette liaison est réalisée par l'intermédiaire d'une portée d'élongation axiale extérieure 1061 d'un porte-disques d'entrée 106, le porte-disques d'entrée 106 étant lié en rotation au voile d'entrée 109, préférentiellement par coopération de formes, par exemple par des cannelures au niveau de l'extrémité avant AV de ladite portée d'élongation axiale extérieure 1061. Alternativement, le porte-disques d'entrée 106 et le voile d'entrée 109 sont liés en rotation par l'intermédiaire de tout moyen de liaison analogue.

Au niveau de son extrémité intérieure 1091, le voile d'entrée comprend une pluralité d'ouvertures 1092 oblongues et traversantes formant l'accès T à l'organe de fixation 600 qui sera décrit ultérieurement. Les ouvertures 1092 sont préférentiellement angulairement régulièrement réparties autour de l'axe de rotation O du mécanisme à double embrayages 10. Une dimension radiale de chaque ouverture 1092 est supérieure à une dimension radiale extérieure de l'organe de fixation 600 afin de faciliter sa manipulation et/ou l'insertion d'un outil pour le manipuler et/ou le configurer.

Les premier et deuxième embrayages 100 et 200 sont commandés par le système d'actionnement 300 qui est agencé pour pouvoir les configurer dans une configuration quelconque comprise entre la configuration embrayée et la configuration débrayée.

Le système d'actionnement 300 comprend :
- un premier actionneur 320 agencé pour configurer le premier embrayage 100 dans une configuration comprise entre la configuration embrayée et la configuration débrayée ;
- un deuxième actionneur 330 agencé pour configurer le deuxième embrayage 200 dans une configuration comprise entre la configuration embrayée et la configuration débrayée ;
- un carter 307 dans lequel sont logés au moins une partie des premier et deuxième actionneurs 320, 330.

De manière préférentielle, les premier et deuxième actionneurs 320 et 330 sont du type vérin hydraulique. Les premier et deuxième actionneurs 320, 330 peuvent chacun comprendre un piston annulaire, chaque piston annulaire étant coaxial avec l'axe O et développant un mouvement axial pour configurer l'embrayage correspondant. Dans ce cas, le système d'actionnement 300 comprend aussi un canal d'alimentation en fluide hydraulique pour chaque actionneur 320, 330. Préférentiellement, le fluide hydraulique est un fluide sous pression, par exemple de l'huile.

Le premier actionneur 320 est lié au premier embrayage 100 par l'intermédiaire d'une part d'un premier palier de découplage 140 et d'autre part d'un premier organe de transmission de force 105. Le premier palier de découplage 140 est agencé pour transmettre des efforts axiaux générés par le premier actionneur 320 au premier organe de transmission de force 105.

Le premier organe de transmission de force 105 est agencé pour transmettre un effort axial E1, exercé parallèlement à l'axe longitudinal O, au premier embrayage 100 via son élongation supérieure, ladite élongation supérieure s'étendant axialement vers l'avant AV pour pouvoir écarter ou presser les premiers éléments de friction 101 contre les deuxièmes éléments de friction 102 d'une part, et contre un moyen de réaction extérieur 103 du voile d'entrée 109 d'autre part. Lorsque les premiers éléments de friction 101 sont écartés des deuxièmes éléments de friction 102, alors le premier embrayage 100 est configuré dans sa configuration débrayée. En revanche, lorsque les premiers éléments de friction 101 sont pressés contre les deuxièmes éléments de friction 102, alors le premier embrayage 100 est configuré dans sa configuration embrayée.

Le premier organe de transmission de force 105 prend la forme d'une tôle ondulée et incurvée axialement vers l'avant AV à son extrémité radiale extérieure. Plus particulièrement, le premier organe de transmission de force 105 collabore avec le premier embrayage 100 par l'intermédiaire d'une pluralité de portées d'extension axiales 1051 extérieures qui s'étendent parallèlement à l'axe de rotation O et qui forment des doigts supérieurs qui permettent de pousser vers l'avant AV les éléments de friction 101, 102 du premier embrayage 100 sous l'effet d'un mouvement axial vers l'avant AV du premier actionneur 320. Les portées d'extension axiales 1051 du premier organe de transmission de force 105 collaborent avec le premier embrayage 100 au travers d'une ouverture 1064 aménagée au travers du porte-disques d'entrée 106.

Le premier organe de transmission de force 105 comprend une portée d'extension radiale supérieure 1052 située en arrière AR des portées d'extension axiales 1051 extérieures. La portée d'extension radiale supérieure 1052 s'étend radialement depuis le premier embrayage 100 jusqu'à l'intérieur du deuxième embrayage 200.

Une portée d'extension axiale intermédiaire 1053 prolonge la première portée d'extension radiale supérieure 1052 sous le deuxième embrayage 200, vers l'avant AV du mécanisme à double embrayages 10. La première portée d'extension axiale intermédiaire 1053 est située radialement à l'aplomb des portées d'extension axiales 1051 extérieures. La portée d'extension axiale intermédiaire 1053 est ménagée parallèlement à l'axe longitudinal O et parallèlement aux portées d'extension axiales 1051 extérieures.

Enfin, le premier organe de transmission de force 105 comprend une pluralité de portées d'extensions radiales intérieures 1055 reliées à la portée d'extension axiale intermédiaire 1053 par l'intermédiaire d'une zone incurvée 1054. Des faces arrière AR des portées d'extensions radiales intérieures 1055 sont en contact avec une face avant AV du premier palier de découplage 140 connecté au premier actionneur 320.

À titre d'exemple non limitatif, le premier organe de transmission de force 105 peut être obtenu par emboutissage.

Le moyen de réaction extérieur 103 est solidaire du voile d'entrée 109. Préférentiellement, le moyen de réaction extérieur 103 est relié au voile d'entrée 109 par l'intermédiaire du porte-disques d'entrée 106 ; alternativement, le moyen de réaction extérieur 103 est fixé solidairement au voile d'entrée 109 par tous moyens de fixations, tels que par exemple par rivetage ou par soudage.

Le moyen de réaction extérieur 103 présente notamment des cannelures extérieures qui coopère avec des cannelures intérieures correspondantes du porte-disques d'entrée 106. À titre d'exemple non limitatif, le moyen de réaction extérieur 103 peut prendre la forme d'un anneau avec une denture sur le pourtour extérieur et une gorge centrale d'appui qui s'étend axialement vers l'arrière AR. À titre d'exemple non limitatif encore, le moyen de réaction extérieur 103 peut prendre la forme d'un bossage du voile d'entrée 109.

Le moyen de réaction extérieur 103 a une forme complémentaire à celle des premiers ou deuxièmes éléments de friction 101, 102, de manière à permettre un couplage par friction des premiers et deuxièmes éléments de friction 101, 102 lorsque le premier actionneur 320 exerce le premier effort axial E1 vers l'avant AV pour configurer le premier embrayage 100 dans sa position embrayée. A contrario, lorsque le premier organe de transmission de force 105 est repoussé vers l'arrière AR par des éléments élastiques de rappel qui seront décrits ultérieurement, alors les premiers éléments de frictions 101 se séparent des deuxièmes éléments de friction 102, permettant alors de découpler lesdits éléments de friction et permettant ainsi de configurer le premier embrayage 100 dans sa configuration débrayée.

Le premier embrayage 100 est destiné à être couplé en rotation au premier arbre de transmission A1 par l'intermédiaire d'un premier porte-disques de sortie 110 formant un élément de sortie dudit premier embrayage 100. Plus particulièrement, le premier porte-disques de sortie 110 est couplé en rotation aux deuxièmes éléments de friction 102 par l'intermédiaire d'une extrémité supérieure 1101 que le porte-disques de sortie 110 comprend. Plus particulièrement encore, le premier porte-disques de sortie 110 est couplé en rotation à un premier moyeu de sortie 120 par l'intermédiaire d'une extrémité intérieure 1102 que le premier porte-disques de sortie 110 comprend.

Le premier porte-disques de sortie 110 comprend sur sa périphérie radiale extérieure une première élongation axiale 107 qui est munie d'une denture destinée à coopérer avec une denture complémentaire sur chaque second élément de friction 102, et plus particulièrement à la périphérie radiale intérieure de chaque second élément de friction 102 du premier embrayage 100. Le premier porte-disques de sortie 110 est ainsi couplé en rotation par engrènement avec les deuxièmes éléments de friction 102 du premier embrayage 100.

L'extrémité intérieure 1102 du premier porte-disques de sortie 110 est lié au premier moyeu de sortie 120 ; ils sont préférentiellement fixés ensemble par soudage, par rivetage ou analogue.

Au niveau de son extrémité intérieure 1102, le premier porte-disques de sortie 110 comprend une pluralité d'ouvertures 1103 oblongues et traversantes formant l'accès T à l'organe de fixation 600 qui sera décrit ultérieurement. Les ouvertures 1103 du premier porte-disques de sortie 110 sont préférentiellement angulairement régulièrement réparties autour de l'axe de rotation O du mécanisme à double embrayages 10. Une dimension radiale de chaque ouverture 1103 du premier porte-disques de sortie 110 est supérieure à une dimension radiale extérieure de l'organe de fixation 600 afin de faciliter sa manipulation et/ou l'insertion d'un outil pour le manipuler et/ou le configurer. De manière avantageuse, les ouvertures 1103 du premier porte-disques de sortie 110 sont coaxiales avec les ouvertures 1092 du voile d'entrée 109. Préférentiellement encore, une dimension radiale des ouvertures 1103 du premier porte-disques de sortie 110 est égale à la dimension radiale des ouvertures 1092 du voile d'entrée 109.

Le premier moyeu de sortie 120 comporte radialement à l'intérieur des cannelures axiales agencées pour coopérer avec des cannelures complémentaires situées sur le premier arbre de transmission A1, de manière à réaliser un couplage en rotation.

Un palier radial 117 est interposé entre le premier moyeu de sortie 120 et le moyeu d'entrée 130 afin de supporter les efforts radiaux du moyeu d'entrée 130 et/ou du voile d'entrée 109 malgré les vitesses de rotation différentes auxquelles peuvent respectivement tourner l'arbre d'entrée et le premier arbre de transmission A1.

De manière analogue, le deuxième embrayage 200 du mécanisme à double embrayages 10 est de conception similaire à celle du premier embrayage 100.

Le deuxième actionneur 330 est lié au deuxième embrayage 200 par l'intermédiaire d'une part d'un deuxième palier de découplage 240 et d'autre part d'un deuxième organe de transmission de force 205. Le deuxième palier de découplage 240 est agencé pour transmettre des efforts axiaux générés par le deuxième actionneur 330 au deuxième organe de transmission de force 205.

Le deuxième organe de transmission de force 205 est globalement situé axialement entre le porte-disques d'entrée 106 et le premier organe de transmission de force 105.

Le deuxième organe de transmission de force 205 est agencé pour transmettre un effort axial E2, exercé parallèlement à l'axe longitudinal O, au deuxième embrayage 200 via son élongation supérieure, ladite élongation supérieure s'étendant axialement vers l'avant AV pour pouvoir écarter ou presser les premiers éléments de friction 201 contre les deuxièmes éléments de friction 202 d'une part, et contre un moyen de réaction intérieur 203 d'autre part. Lorsque les premiers éléments de friction 201 sont écartés des deuxièmes éléments de friction 202, alors le deuxième embrayage 200 est configuré dans sa configuration débrayée. En revanche, lorsque les premiers éléments de friction 201 sont pressés contre les deuxièmes éléments de friction 202, alors le deuxième embrayage 200 est configuré dans sa configuration embrayée.

Le deuxième organe de transmission de force 205 prend la forme d'une tôle ondulée et incurvée axialement vers l'avant AV à son extrémité radiale extérieure. Plus particulièrement, le deuxième organe de transmission de force 205 collabore avec le deuxième embrayage 200 par l'intermédiaire d'une pluralité de portées d'extension axiales 2051 qui permettent de pousser vers l'avant AV les éléments de friction 201, 202 du deuxième embrayage 200 sous l'effet d'un mouvement axial vers l'avant AV du deuxième actionneur 330. Les portées d'extension axiales 2051 du deuxième organe de transmission de force 205 collaborent avec le deuxième embrayage 200 au travers d'une ouverture 1065 aménagée au travers du porte-disques d'entrée 106.

Le deuxième organe de transmission de force 205 comprend une portée d'extension radiale supérieure 2052 située en arrière AR des portées d'extension axiales 2051 extérieures. La portée d'extension radiale supérieure 2052 s'étend radialement depuis le deuxième embrayage 200 jusqu'à l'intérieur du deuxième embrayage 200, et plus particulièrement au niveau de la portée d'extension axiale intermédiaire 1053 du premier organe de transmission de force 105.

Une portée d'extension axiale intermédiaire 2053 prolonge la portée d'extension radiale supérieure 2052 sous le deuxième embrayage 200, vers l'avant AV du mécanisme à double embrayages 10. La portée d'extension axiale intermédiaire 2053 est située radialement à l'intérieur du deuxième embrayage 200 et au niveau de la portée d'extension radiale supérieure 1052 du premier organe de transmission de force 105.

Enfin, le deuxième organe de transmission de force 205 comprend une pluralité de portées d'extensions radiales intérieures 2055 reliées à la portée d'extension axiale intermédiaire 2053 par l'intermédiaire d'une zone incurvée 2054. Des faces arrière AR des portées d'extensions radiales intérieures 2055 sont en contact avec une face avant AV du deuxième palier de découplage 240 connecté au deuxième actionneur 330.

À titre d'exemple non limitatif, le deuxième organe de transmission de force 205 peut être obtenu par emboutissage.

Le moyen de réaction intérieur 203 est solidaire d'une partie d'élongation axiale intérieure 1062 orientée vers l'avant AV et solidaire du porte-disques d'entrée 106, fixée au porte-disques d'entrée 106 par tous moyens, tels que par exemple par soudage ou par rivetage. Alternativement, le moyen de réaction intérieur 203 et le porte-disques d'entrée 106 sont issus de matière.

Le moyen de réaction extérieur 203 a une forme complémentaire à celle des premiers ou deuxièmes éléments de friction 201, 202, de manière à permettre un couplage par friction des premiers et deuxièmes éléments de friction 201, 202 lorsque le deuxième actionneur 330 exerce un effort axial E2 vers l'avant AV pour configurer le deuxième embrayage 200 dans sa position embrayée. A contrario, lorsque le deuxième organe de transmission de force 205 est repoussé vers l'arrière AR par des éléments élastiques de rappel qui seront décrits ultérieurement, alors les premiers éléments de frictions 201 se séparent des deuxièmes éléments de friction 202, permettant alors de découpler lesdits éléments de friction 201, 202 et permettant ainsi de configurer le deuxième embrayage 200 dans sa configuration débrayée.

À titre d'exemple non limitatif, le moyen de réaction extérieur 203 peut prendre la forme d'un anneau avec une denture sur le pourtour extérieur et une gorge centrale d'appui qui s'étend axialement vers l'arrière AR.

Le deuxième embrayage 200 est destiné à être couplé en rotation au deuxième arbre de transmission A2 par l'intermédiaire d'un deuxième porte-disques de sortie 210 formant un élément de sortie dudit deuxième embrayage 200. Plus particulièrement, le deuxième porte-disques de sortie 210 est couplé en rotation aux deuxièmes éléments de friction 202 au niveau de son extrémité supérieure d'une part, et d'autre part à un deuxième moyeu de sortie 220 au niveau de son extrémité inférieure.

Le deuxième porte-disques de sortie 210 comporte sur sa périphérie radiale intérieure une élongation axiale 207 qui est munie d'une denture destinée à coopérer avec une denture complémentaire sur chaque deuxième élément de friction 202, et plus particulièrement à la périphérie radiale intérieure de chaque deuxième élément de friction 202 du deuxième embrayage 200. Le deuxième porte-disques de sortie 210 est ainsi couplé en rotation par engrènement avec les deuxièmes éléments de friction 202 du deuxième embrayage 200.

L'extrémité radiale intérieure 2102 du deuxième porte-disques de sortie 210 est lié au deuxième moyeu de sortie 220, préférentiellement fixés ensemble par soudage, par rivetage ou analogue.

Au niveau de son extrémité intérieure 2102, le deuxième porte-disques de sortie 210 comprend une pluralité d'ouvertures 2103 oblongues et traversantes formant l'accès T à l'organe de fixation 600 qui sera décrit ultérieurement. Les ouvertures 2103 du deuxième porte-disques de sortie 210 sont préférentiellement angulairement régulièrement réparties autour de l'axe de rotation O du mécanisme à double embrayages 10. Une dimension radiale de chaque ouverture 2103 du deuxième porte-disques de sortie 210 est supérieure à une dimension radiale extérieure de l'organe de fixation 600 afin de faciliter sa manipulation et/ou l'insertion d'un outil pour le manipuler et/ou le configurer. De manière avantageuse, les ouvertures 2103 du deuxième porte-disques de sortie 210 sont coaxiales avec les ouvertures 2092 du voile d'entrée 109 et/ou avec les ouvertures 1103 du premier porte-disques de sortie 110. Préférentiellement encore, une dimension radiale des ouvertures 2103 du deuxième porte-disques de sortie 210 est égale à la dimension radiale des ouvertures 1092 du voile d'entrée 109 et/ou à celle des ouvertures 1103 du premier porte-disques de sortie 110.

Le deuxième moyeu de sortie 220 comporte radialement à l'intérieur des cannelures axiales agencées pour coopérer avec des cannelures complémentaires situées sur le deuxième arbre de transmission A2, de manière à réaliser un couplage en rotation.

Un palier axial 116 est intercalé entre le premier porte-disques de sortie 110 et le deuxième porte-disques de sortie 210 afin de pouvoir transmettre un effort axial entre les deux porte-disques de sortie 110, 210 qui peuvent tourner à des vitesses différentes lorsque les premier et deuxième embrayages 100, 200 sont configurés dans une configuration différente.

Les premier et deuxième embrayages 100, 200 comprennent respectivement des éléments élastiques de rappel pour repousser automatiquement le premier et le deuxième actionneur 320, 330 vers l'arrière. Plus particulièrement, les éléments élastiques de rappel sollicitent axialement le premier et respectivement le deuxième organe de transmission de force 105, 205 vers l'arrière AR afin de faciliter l'écartement des premiers éléments de friction 101, 201 par rapport aux deuxièmes éléments de friction 102, 202 du premier et respectivement du deuxième embrayage 100, 200 en repoussant le premier et le deuxième actionneur 320, 330 vers l'arrière. À titre d'exemple non limitatif, il peut s'agir par exemple de rondelles Belleville.

Le porte-disques d'entrée 106 comprend en outre une portée d'extension axiale 1066 qui s'étend axialement vers l'avant AV sous le deuxième embrayage 200, et un segment intérieur 1067 qui s'étend radialement, sensiblement perpendiculaire à l'axe de rotation O du mécanisme à doubles embrayages 10. À son extrémité intérieure, le segment intérieur 1067 du porte-disques d'entrée 106 prend appui sur un talon 118 en appui radial sur un palier support 113 supporté par un support d'embrayage 500 et agencé pour supporter la charge radiale du porte-disques d'entrée 106.

Le support d'embrayage 500 est situé dans une position axiale intermédiaire entre le système d'actionnement 300 et les premier et deuxième moyeux de sortie 120, 220.

Axialement vers l'avant AV, le palier support 113 est en appui axial contre une extrémité axiale 510 avant AV du support d'embrayage 500 et formant un talon d'appui. D'une manière générale, le talon d'appui permettant d'arrêter axialement le palier support 113 est disposé du côté opposé à l'effort axial E1, E2 exercé par le premier ou le deuxième actionneur 320, 330.

L'extrémité axiale 510 avant AV du support d'embrayage 500 est en appui axial contre le deuxième porte-disques de sortie 210 par l'intermédiaire d'un palier axial 115 afin de pouvoir transmettre un effort axial entre le deuxième porte-disques de sortie 210 et le support d'embrayage 500, ledit support d'embrayage 500 étant immobile en rotation tandis que le deuxième porte-disques de sortie 210 peut être animé d'un mouvement de rotation lorsque le deuxième embrayage 200 est configuré dans sa configuration embrayée.

Le palier support 113 est ici par exemple un palier à roulements. Avantageusement, le palier support 113 est du type d'un palier à contacts obliques afin de pouvoir transmettre à la fois un effort axial et un effort radial. Cet effort axial est, au niveau du palier à roulements 113, repris par le support d'embrayage 500 au niveau du talon d'appui. En effet, lorsque le premier ou le deuxième actionneur 320, 330 transmet un effort axial E1 orienté vers l'avant AV au premier ou deuxième organe de force 105, 205 afin de configurer l'embrayage 100, 200 correspondant dans la configuration embrayée, l'effort axial E1, E2 est transmis entre une première extrémité comprenant ledit premier ou deuxième actionneur 320, 330 et une deuxième extrémité située au niveau de l'arbre de transmission A1, A2, et plus particulièrement au niveau de l'organe de fixation 600. Tous les éléments participants à la transmission de l'effort axial E1, E2 lors du fonctionnement du mécanisme à double embrayages 10 et situés axialement entre l'organe de fixation 600 et le premier ou deuxième actionneur 320, 330 sont bloqués axialement de manière à pouvoir transmettre ledit effort axial E1, E2.

Le support d'embrayage 500 sera décrit plus particulièrement en référence aux figures 2A et 2B.

Afin de lubrifier et de refroidir les premier 100 et deuxième 200 embrayages durant leur fonctionnement, le mécanisme à double embrayages 10 comprend conduit et un canal permettant d'acheminer un fluide hydraulique jusqu'aux premier 100 et deuxième 200 embrayages. Plus particulièrement, le support d'embrayage 500 comprend un conduit 700 débouchant hors du support d'embrayage 500 par l'intermédiaire d'un orifice de sortie 725. Le conduit 700 comporte une partie d'extension radiale 720 située dans les exemples illustrés au niveau du palier support 113, ladite partie d'extension radiale 720 débouchant hors du support d'embrayage 500 par l'intermédiaire de l'orifice de sortie 725.

Alors que dans le mode de réalisation illustré dans les figures 1A et 2A, ledit conduit 700 comprend une partie d'extension axiale 710 et une partie d'extension radiale 720, dans le mode de réalisation illustré dans les figures 1B et 2B, ledit conduit 700 consiste en la partie d'extension radiale 720.

La partie d'extension radiale 720 du conduit 700 est avantageusement située à proximité de l'extrémité axiale 510 avant AV du support d'embrayage 500, et plus particulièrement encore dans une situation intermédiaire entre le palier support 113 et les moyeux de sortie 120, 220.

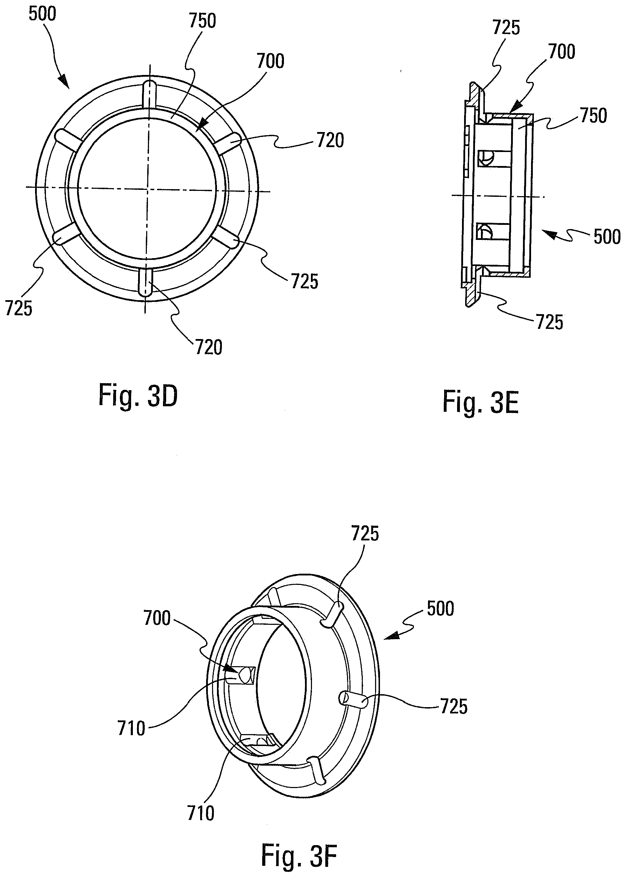

L'orifice de sortie 725 est situé radialement à l'extérieur de la partie d'extension radiale 720 du conduit 700. L'orifice de sortie 725 prend la forme d'un trou débouchant sur la face extérieure du support d'embrayage 500, et plus particulièrement au niveau d'une face extérieure de l'extrémité axiale 510 avant AV formant le talon d'appui. En d'autres termes, l'orifice de sortie 725 est définie comme par une ouverture située sur la face extérieure du support d'embrayage 500 et qui donne accès au conduit 700, en particulier à la partie d'extension radiale 720 du conduit 700 comme illustré sur les FIGURES 2A, 2B et 3D-F, permettant de faire communiquer ledit conduit, en particulier ladite partie d'extension radiale 720, avec l'espace situé radialement à l'extérieur du support d'embrayage 500, dans le module d'embrayage 15.

Radialement, l'orifice de sortie 725 est situé à l'extérieur de l'organe de fixation 600. Plus particulièrement encore, l'orifice de sortie 725 est situé radialement à l'extérieur des ouvertures 1103 du premier porte-disques de sortie 110 et/ou des ouvertures 2103 du deuxième porte-disques de sortie 210 et/ou des ouvertures 1093 du voile d'entrée 109. Cette configuration avantageuse permet au fluide hydraulique sortant hors du conduit 700 par l'orifice de sortie 725 de ne pas s'écouler hors du mécanisme à double embrayages 10 par les ouvertures 1093, 1103, 2103 formant l'accès T à l'organe de fixation 600. Consécutivement, la lubrification et/ou le refroidissement des premier 100 et deuxième 200 embrayages durant leur fonctionnement est amélioré.

Le carter 307 du système d'actionnement 300 comprend un canal 800 permettant à un fluide hydraulique de circuler. Dans l'exemple illustré, ledit canal 800 comprend une partie d'extension axiale 810 et une partie d'extension radiale 820 située à l'extrémité axiale avant AV de la partie d'extension axiale 810. Le canal 800 est agencé pour collaborer avec le conduit 700 afin de permettre une circulation fluidique du fluide hydraulique entre le conduit 700 et le canal 800. Plus particulièrement, dans l'exemple illustré FIGURE 1A une extrémité radiale extérieure de la partie d'extension radiale 820 du canal 800 collabore avec une extrémité axiale arrière du conduit 700 afin de permettre une communication fluidique entre le conduit 700 et le canal 800. Avantageusement le canal 800 est en particulier en communication fluidique avec la partie annulaire 750 du conduit 700 afin de faciliter le positionnent angulaire du support d'embrayage 500 sans nécessiter d'indexation angulaire.

Le canal 800 est avantageusement situé sur une partie radialement intérieure du carter 307, préférentiellement encore située à l'intérieur des premier 320 et deuxième 330 actionneurs.

Le carter 307 du système d'actionnement 300 comprend une portée d'élongation axiale 3071 qui est située radialement à l'intérieur des premier 320 et deuxième 330 actionneurs et qui s'étend axialement vers l'avant AV par rapport audits premier 320 et deuxième 330 actionneurs, en direction du voile d'entrée 109. La portée d'élongation axiale 3071 du carter 307 est agencée pour collaborer avec le support d'embrayage 500 afin de réaliser un centrage et/ou un couplage en rotation. Le centrage et/ou le couplage en rotation sont réalisés par emmanchement, préférentiellement en force, un diamètre radial d'une face extérieure de la portée d'élongation axiale 3071 du carter 307 étant inférieur ou égal à un diamètre radial d'une face intérieure du support d'embrayage 500. Éventuellement, le couplage en rotation peut être réalisé à l'aide de premières cannelures situées sur la portée d'élongation axiale 3071 et collaborant avec des deuxièmes cannelures situées sur le support d'embrayage 500.

Une extrémité terminale 3072 avant AV de la portée d'extension axiale 3071 est agencée pour collaborer avec l'organe de fixation 600 lors de l'assemblage du système d'actionnement 300 sur le support d'embrayage 500, et plus particulièrement afin de faciliter l'emmanchement du carter 307 dans le support d'embrayage 500. En particulier l'extrémité terminale 3072 de la portée d'extension axiale 3071 du carter 307 prend la forme d'une surface conique 3073 dont un diamètre décroît en s'éloignant des premier 320 et deuxième 330 actionneurs. Cette configuration avantageuse permet de faciliter l'ouverture de l'organe de fixation 600 en le forçant à se déformer radialement. L'interaction entre l'organe de fixation 600 et la portée d'élongation axiale 3071 du carter 307 sera décrite plus en détail en référence aux FIGURES 2A et 2B.

La portée d'élongation axiale 3071 du carter 307 comprend aussi une gorge circonférentielle 3074 destinée à collaborer avec l'organe de fixation 600. La gorge circonférentielle 3074 est située axialement entre la surface conique 3073 et les premier 320 et deuxième 330 actionneurs. Une dimension axiale de la gorge circonférentielle 3074 est telle que l'organe de fixation 600 peut s'engager au moins partiellement dans ladite gorge circonférentielle 3074 afin de réaliser un arrêt axial. En d'autres termes, la dimension axiale de la gorge circonférentielle 3074 est supérieure ou égale à une épaisseur axiale de l'organe de fixation 600.

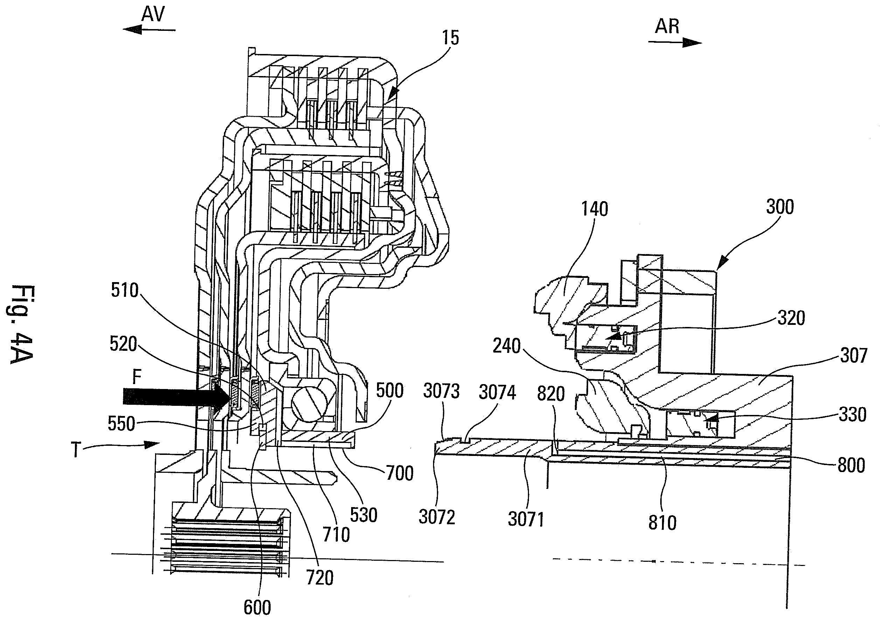

Finalement, le mécanisme à double embrayages est formé par un module d'embrayage 15 assemblé sur le système d'actionnement 300 notamment selon un procédé d'assemblage réversible illustré par les FIGURES 4A à 4C.

Le module d'embrayage 15 comprend le premier embrayage 100 et le deuxième embrayage 200 supportés par le support d'embrayage 500. D'une manière plus générale, le module d'embrayage 15 comprend tous les éléments qui permettent d'établir un couplage en rotation des premier 100 et deuxième 200 embrayages avec l'arbre d'entrée et les arbres de transmission A1, A2. En particulier, le module d'embrayage 15 comprend le voile d'entrée 109, le porte-disques d'entrée 106, les premier 110 et deuxième 210 porte-disques de sortie, les premier 105 et deuxième 205 organes de transmission de force, le moyen de réaction extérieur 103 et le moyen de réaction intérieur 203, les paliers axiaux 115, 116, 117.

Le module d'embrayage 15 est assemblé sur le carter 307 du système d'actionnement 300 par l'intermédiaire de l'organe de fixation 600, formant ainsi le mécanisme à double embrayages 10 conforme au deuxième aspect de l'invention.

L'organe de fixation 600 va maintenant être décrit plus précisément en référence aux FIGURES 2A et 2B et 3A à 3C décrivant divers exemples de réalisation d'un tel organe de fixation 600 préassemblé sur le support d'embrayage 500.

Comme visible sur les FIGURES 2A et 2B, dans les variantes de réalisation correspondantes le support d'embrayage 500 comprend une partie d'extension axiale 530 configurée pour être disposées sous les embrayages 100, 200 et pour supporter - via le palier support 113 - lesdits embrayages 100, 200. La partie d'extension axiale 530 du support d'embrayage 500 prend la forme d'une portée cylindrique creuse afin de pouvoir loger les arbres de transmission A1, A2, non visibles sur les FIGURES 2A et 2B. Le support d'embrayage 500 comprend aussi l'extrémité axiale 510 avant qui s'étend radialement à l'extérieur de la partie d'extension axiale 530 du support d'embrayage 500. De manière générale, l'extrémité axiale 510 avant AV du support d'embrayage 500 s'étend de manière sensiblement perpendiculaire à la partie d'extension axiale 530 dudit support d'embrayage 500.

Comme illustré sur la coupe 2A, dans cet exemple, la partie d'extension axiale 530 du support d'embrayage 500 loge la partie d'extension axiale 710 du conduit 700 décrit précédemment ; et l'extrémité axiale 510 avant AV du support d'embrayage 500 loge la partie d'extension radiale 720 du conduit 700. Le support d'embrayage 500 comporte ici plusieurs parties d'extension radiale 720 du conduit 700 qui sont angulairement régulièrement réparties autour de l'axe O et sont en communication fluidique via les parties d'extension axiale 710 avec la partie annulaire 750. Celle-ci est ici située à une extrémité axiale du support d'embrayage 500, du côté opposé à l'organe de fixation 600. La partie annulaire 750 est par exemple ouverte vers l'intérieur du support d'embrayage 500. Dans l'exemple illustré ici les parties d'extension radiale 720 du conduit 700 sont situées à l'arrière de la partie d'extension radiale 510 du support 500. Elles sont ouvertes latéralement. Les parties d'extension axiale 710 du conduit 700 sont ici également ouvertes latéralement, plus particulièrement ouvertes vers l'intérieur du support 500.

Dans l'exemple illustré sur la coupe 2B, la partie d'extension axiale 530 du support d'embrayage 500 loge la partie d'extension radiale 720 du conduit 700 ainsi que la partie annulaire 750. De façon particulière dans cet exemple le conduit 700 est constitué de plusieurs parties d'extension radiale 720 s'étendant entre un orifice de sortie 725 et la partie annulaire 750 du conduit 700. Les orifices de sortie 725 et les parties d'extension radiale 720 sont angulairement régulièrement réparties autour de l'axe O. La partie annulaire 750 du conduit 700 est ici située dans la partie d'extension axiale 530 du support d'embrayage 500, en particulier du côté de l'organe de fixation 600.Au niveau de la face avant 515 de l'extrémité axiale 510 avant AV du support d'embrayage 500, l'organe de fixation 600 est logé de manière démontable. En particulier, l'organe de fixation 600 est plaqué contre la face avant 515 du support d'embrayage 500 et maintenu dans cette position de manière non définitive par des moyens de retenue axiale 550. Les moyens de retenue axiale 550 sont avantageusement situés radialement à l'intérieur des ouvertures oblongues 1093, 1103, 2103 du voile d'entrée 109 et des porte-disques de sortie 110, 210 formant l'accès T afin de faciliter le montage et le démontage de l'organe de fixation 600.

Dans le premier exemple de réalisation illustré sur les FIGURES 2A-2B, les moyens de retenue axiale 500 de l'organe de fixation 600 prennent la forme de plusieurs brides 550a, 550b, 550c formant chacune des secteurs angulaires et permettant de réaliser un blocage axial, éventuellement avec un jeu axial non nul - de l'organe de fixation contre la face avant.

Les brides 550a-550c sont avantageusement issues de matière avec le support d'embrayage 500. Éventuellement elles peuvent être rapportées et fixées au support d'embrayage 500 par tous moyens de fixation. Radialement, les brides 550a-550c sont avantageusement situés radialement à l'intérieur des ouvertures oblongues 1093, 1103, 2103 du voile d'entrée 109 et des porte-disques de sortie 110, 210 formant l'accès T afin de faciliter le montage et le démontage de l'organe de fixation 600.

Les brides 550a-550c sont avantageusement angulairement régulièrement réparties autour de l'axe O afin d'améliorer le maintien axial de l'organe de fixation 600 contre le support d'embrayage 500.

Chaque bride 550a-550c forme ainsi une gorge 520 à l'intérieur de laquelle l'organe de fixation 600 peut être logé et maintenu axialement. Plus particulièrement, les dimensions axiales de la gorge 520 sont supérieures ou égales à l'épaisseur axiale de l'organe de fixation 600, prise au moins en sa partie radialement extérieure.

De manière avantageuse, les dimensions radiales de la gorge sont telles qu'il existe un jeu radial non nul entre le contour extérieur 620 de l'organe de fixation 600 et le contour extérieur 521 de la gorge 520 afin de permettre un démontage dudit organe de fixation 600 par décentrage par rapport à l'axe de rotation O du support d'embrayage 500. Bien entendu, lorsque l'organe de fixation 600 est radialement déformable, le jeu radial décrit précédemment n'est pas indispensable.

Dans les exemples de réalisation illustrés, l'organe de fixation 600 prend la forme d'un anneau de blocage axial déformable radialement : le contour intérieur 610 et/ou le contour extérieur 620 de l'organe de fixation 600 sont radialement déformables afin de permettre de déloger ou de loger ledit organe de fixation 600 dans la gorge 520 du support d'embrayage 500. Par déformable, on comprend que l'organe de fixation 600 peut subir une déformation élastique radiale permettant de modifier les dimensions radiales de son contour intérieur 610 et/ou de son contour extérieur 620 et, consécutivement, de permettre de modifier son diamètre intérieur et/ou son diamètre extérieur afin de le configurer dans une première configuration dans laquelle l'organe de fixation 600 établit une liaison mécanique entre le module d'embrayage 15 et le système d'actionnement 300, et une deuxième configuration dans laquelle l'organe de fixation 600 ne coopère plus avec le système d'actionnement 300, permettant alors de libérer le module d'embrayage 15 dudit système d'actionnement 300.

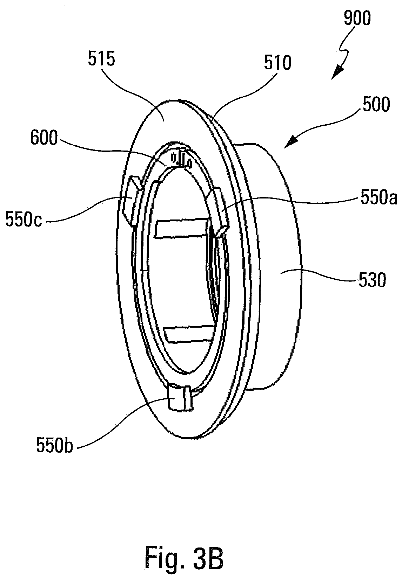

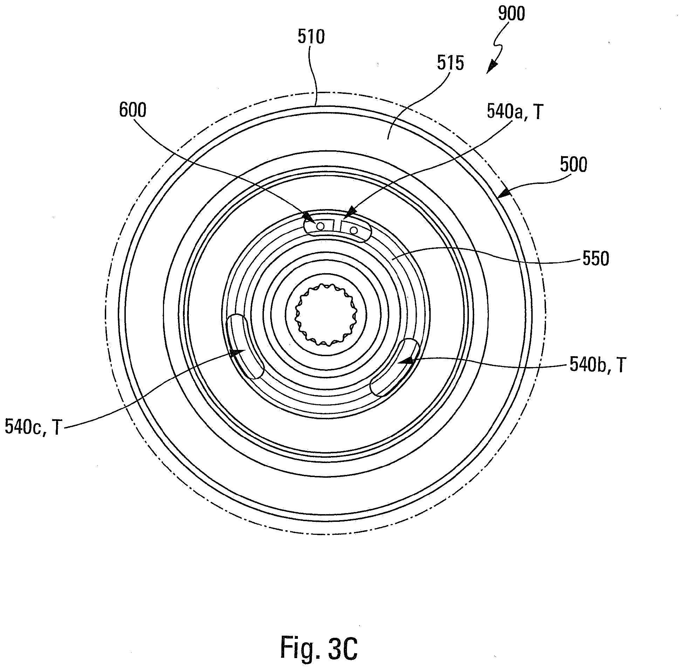

La FIGURE 3C illustre un deuxième exemple de réalisation des moyens de retenue axiale 550 de l'organe de fixation 600 sur le support d'embrayage 500. Plus particulièrement, les moyens de retenue axiale prennent ici la forme d'une plaque de fermeture de forme annulaire collaborant avec la face avant 515 du support d'embrayage 500. De manière comparable aux brides 550a-550c des FIGURES 3A-3C, la plaque de fermeture illustrée sur la FIGURE 3 forme une gorge située entre ladite plaque de fermeture et la face avant 515 du support d'embrayage, à l'intérieur de laquelle l'organe de fixation 600 peut être logé, éventuellement sans jeu axial. Pour enlever l'organe de fixation 600, celui-ci est déformé radialement afin de le faire passer au centre de la plaque de fermeture annulaire. Afin de faciliter la manipulation de l'organe de fixation 600, des ouvertures 540a-540c sont prévues sur la plaque de fermeture. Les ouvertures 540a-540c prennent la forme de trous oblongs de forme sectorielle, angulairement régulièrement répartis autour de l'axe de rotation O. Les ouvertures 540 forment l'accès T à l'organe de fixation 600 afin de permettre sont assemblage son démontage. Les ouvertures 540a-540c de la plaque de fermeture sont avantageusement situés radialement à l'intérieur des ouvertures oblongues 1093, 1103, 2103 du voile d'entrée 109 et des porte-disques de sortie 110, 210 formant l'accès T afin de faciliter le montage et le démontage de l'organe de fixation 600.

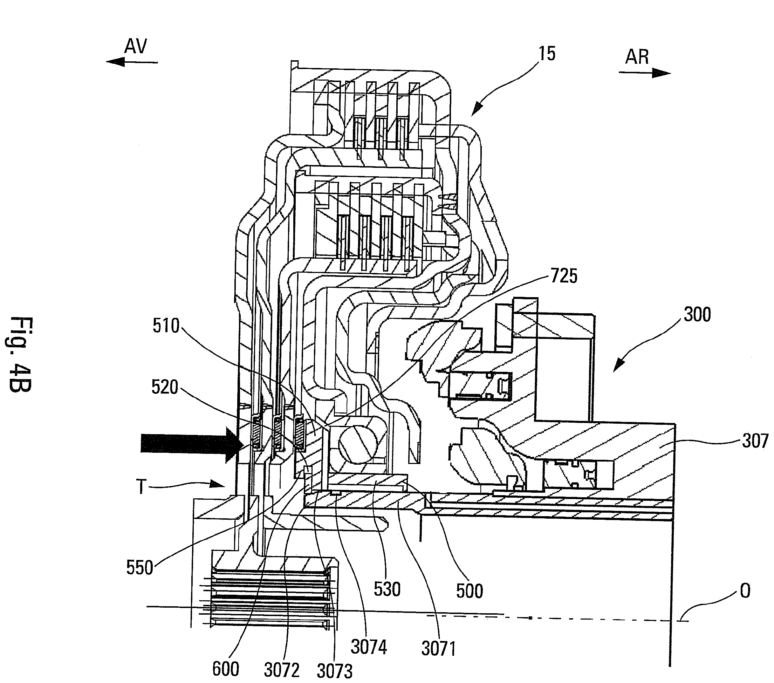

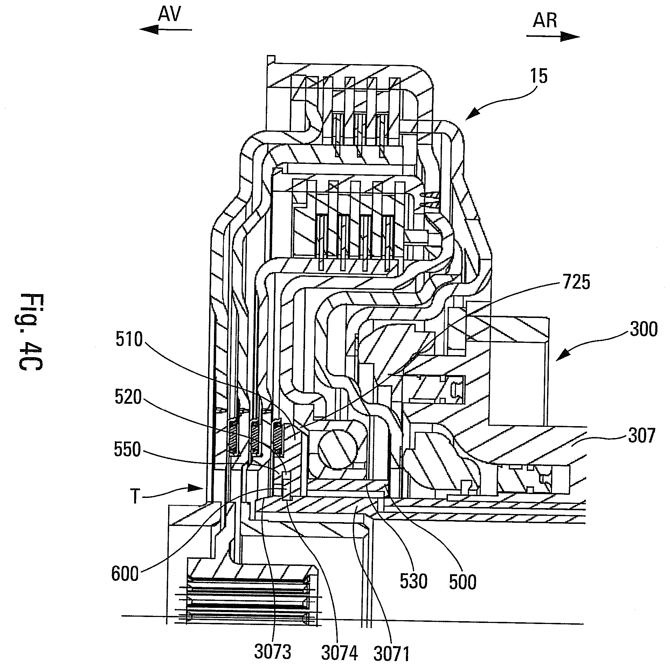

Les FIGURES 4A, 4B et 4C illustrent un procédé d'assemblage du mécanisme à double embrayages 10 décrit précédemment.

Par exemple, le procédé d'assemblage du mécanisme à double embrayages 10 comprend les étapes suivantes :
- une étape de montage de l'organe de fixation 600 sur le support d'embrayage 500 ; et/ou
- une étape d'assemblage du module d'embrayage 15 ; et/ou
- une étape de centrage du module d'embrayage 15 sur carter 307 du système d'actionnement 300 ; et/ou
- une étape de translation relative du module d'embrayage 15 par rapport au système d'actionnement 300 afin de rapprocher ledit module d'embrayage 15 dudit système d'actionnement 300 ; et/ou
- une étape de blocage axial du module d'embrayage 15 au système d'actionnement 300.

De manière astucieuse, il s'agit d'un procédé d'assemblage réversible, le mécanisme à double embrayages 10 pouvant être désassemblé de manière non destructrice.

Le module d'embrayage 15 et le système d'actionnement 300 sont alignés, préférentiellement de manière coaxiale par rapport à l'axe O.

Comme visible sur la FIGURE 4B, la portée d'élongation axiale 3071 du carter 307 est emmanchée dans la portée d'élongation axiale 530 du support d'embrayage 500, la face extérieure de la portée d'élongation axiale 3071 du carter 307 collaborant avec la face intérieure de la portée d'élongation axiale 530 du support d'embrayage 500.

La FIGURE 4C illustre le mécanisme à double embrayages 10 dans lequel l'organe de fixation 600 est engagé dans la gorge circonférentielle 3074, réalisant ainsi un couplage axial du module d'embrayage 15 avec le système d'actionnement 300, et plus particulièrement un arrêt axial. Dans cette configuration, l'organe de fixation 600 permet de solidariser de manière non définitive le module d'embrayage 15 sur le système d'actionnement 300.

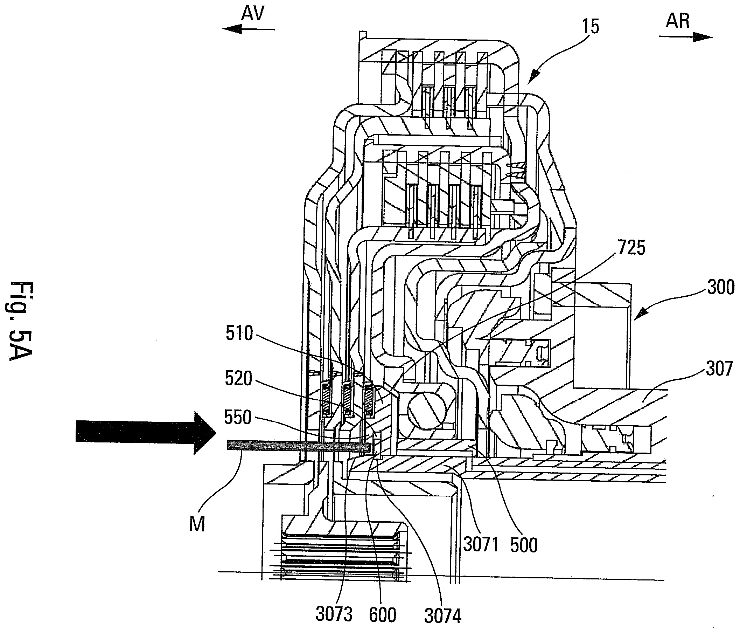

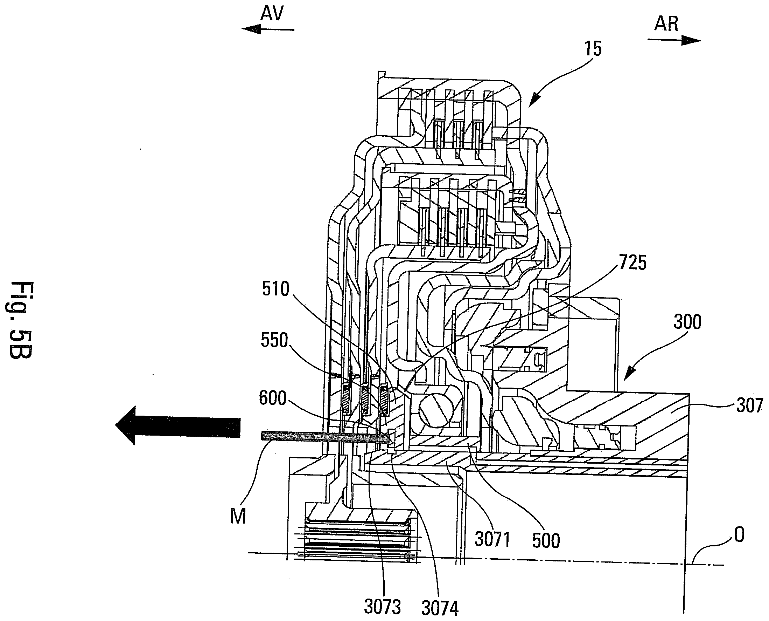

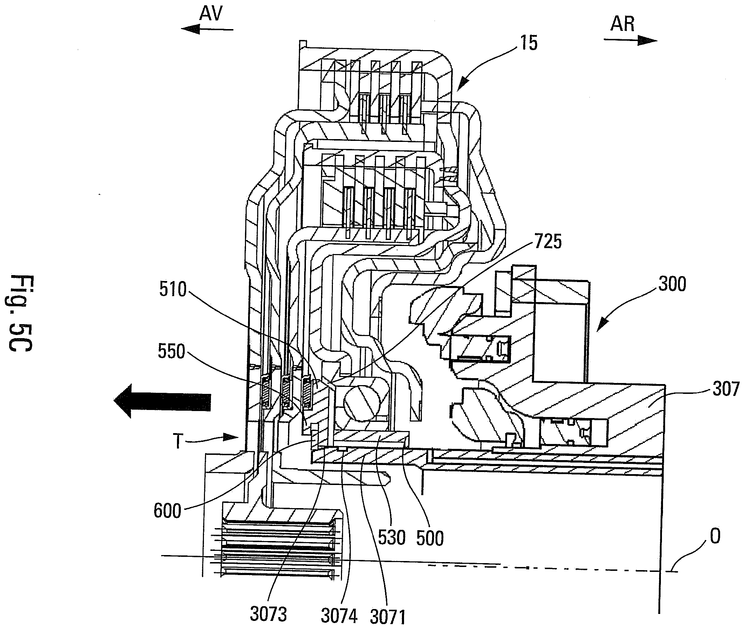

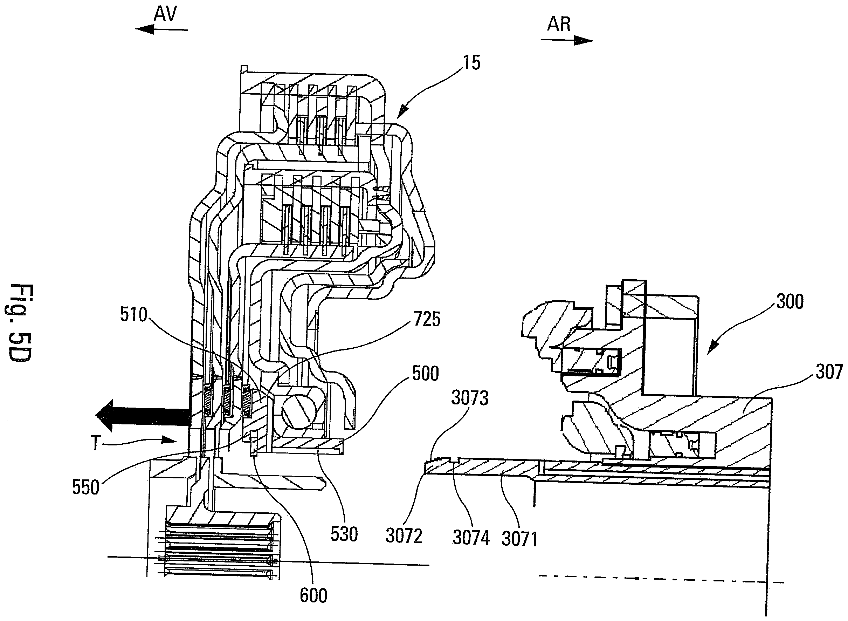

Les FIGURES 5A, 5B, 5C et 5D illustrent un procédé de désassemblage du mécanisme à double embrayages 10 décrit précédemment.

Par exemple, le procédé de désassemblage du mécanisme à double embrayages 10 comprend les étapes suivantes :
- une étape de configuration de l'organe de fixation 600 de manière à ne plus collaborer avec le système d'actionnement 300 ;
- une étape de séparation du module d'embrayage 15 et du système d'actionnement 300.

De manière astucieuse, il s'agit d'un procédé de désassemblage non destructif pour les différents éléments du mécanisme à double embrayages 10, ce dernier pouvant être réassemblé ultérieurement.

Bien sûr, l'invention n'est pas limitée aux exemples qui viennent d'être décrits et de nombreux aménagements peuvent être apportés à ces exemples sans sortir du cadre de l'invention. Notamment, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Support d'embrayage (500) agencé pour supporter au moins un premier embrayage (100, 200),
ledit support délimitant un conduit (700) présentant au moins un orifice de sortie (725) permettant à un fluide hydraulique de circuler depuis un système d'actionnement (300) vers le au moins un premier embrayage et comportant au moins une partie d'extension radiale (720),
**caractérisé en ce que** le conduit (700) comporte en outre une partie annulaire (750), le système d'actionnement (300) comprenant un canal (800) agencé pour collaborer avec le conduit (700) afin de permettre une circulation fluidique du fluide hydraulique entre le conduit (700) et le canal (800).

2. Support d'embrayage (500) selon la revendication 1, le conduit comportant une pluralité d'orifices d'entrée (723) et/ou une pluralité d'orifices de sortie (725), lesdits orifices d'entrée (723), respectivement orifices de sortie (723) étant préférentiellement angulairement régulièrement réparties autour d'un axe longitudinal O du support d'embrayage.

3. Support d'embrayage (500) selon la revendication 1 ou 2, le conduit étant au moins en partie ouvert latéralement.

4. Support d'embrayage (500) selon la revendication précédente, au moins une partie d'extension radiale (720) du conduit étant ouverte latéralement.

5. Support d'embrayage (500) selon l'une quelconque des revendications précédentes, la partie annulaire étant ouverte vers l'intérieur du support d'embrayage (500), c'est à dire vers un axe longitudinal du support d'embrayage.

6. Support d'embrayage (500) selon l'une quelconque des revendications précédentes, la partie annulaire du conduit étant située dans une partie d'extension axiale du support d'embrayage.

7. Support d'embrayage (500) selon l'une quelconque des revendications précédentes, étant réalisé au moins en partie en un matériau choisi parmi : l'acier, l'aluminium, un matériau fritté, un matériau plastique.

8. Support d'embrayage (500) selon l'une quelconque des revendications précédentes, étant réalisé en une seule pièce.

9. Support d'embrayage (500) selon l'une quelconque des revendications 1 à 7 étant réalisé en au-moins deux parties.

10. Support d'embrayage (500) selon la revendication précédente comportant un palier support (113) notamment pour supporter radialement les premier (100) et deuxième (200) embrayages.

11. Support d'embrayage selon la revendication précédente le palier support (113) étant du type d'un palier à contacts obliques.

12. Assemblage (900) d'un support selon l'une quelconque des revendications précédentes et d'un organe de fixation (600).

13. Module d'embrayage (10) comprenant :
- un premier embrayage (100) en rotation autour de l'axe (O) ;
- un deuxième embrayage (200) en rotation autour de l'axe (O) ;
- un support d'embrayage (500) selon l'une quelconque des revendications 1 à 9;
- un organe de fixation (600) du module d'embrayage.

14. Mécanisme à double embrayage comprenant un module d'embrayage selon la revendication précédente et un système d'actionnement comprenant :
- un premier actionneur agencé pour se déplacer axialement afin d'embrayer ou de débrayer le premier embrayage ;
- un deuxième actionneur agencé pour se déplacer axialement afin d'embrayer ou de débrayer le deuxième embrayage ;
- un carter (307) logeant le premier et le deuxième actionneur, ledit carter comprenant un canal (800) permettant à un fluide hydraulique de circuler, ledit canal (800) étant agencé pour collaborer avec le conduit (700) afin de permettre une circulation fluidique du fluide hydraulique entre le conduit (700) et le canal (800).

15. Mécanisme à double embrayage selon la revendication précédente, le canal (800) comprenant une partie d'extension axiale (810) agencée pour collaborer avec le conduit (700).

## Patentansprüche

1. Kupplungsträger (500), der so angeordnet ist, dass er mindestens eine erste Kupplung (100, 200) trägt,
wobei der Träger eine Leitung (700) begrenzt, die mindestens eine Austrittsöffnung (725) aufweist, die es einer Hydraulikflüssigkeit ermöglicht, von einem Betätigungssystem (300) zu der mindestens einen ersten Kupplung zu fließen, und mindestens einen radialen Verlängerungsabschnitt (720) aufweist,
**dadurch gekennzeichnet, dass** die Leitung (700) ferner einen ringförmigen Abschnitt (750) aufweist, wobei das Betätigungssystem (300) einen Kanal (800) aufweist, der so angeordnet ist, dass er mit der Leitung (700) zusammenwirkt, um eine Flüssigkeitszirkulation der Hydraulikflüssigkeit zwischen der Leitung (700) und dem Kanal (800) zu ermöglichen.

2. Kupplungsträger (500) nach Anspruch 1, wobei die Leitung eine Vielzahl von Einlassöffnungen (723) und/oder eine Vielzahl von Auslassöffnungen (725) aufweist, wobei die Einlassöffnungen (723) bzw. Auslassöffnungen (723) vorzugsweise winkelmäßig gleichmäßig um eine Längsachse O des Kupplungsträgers verteilt sind.

3. Kupplungsträger (500) nach Anspruch 1 oder 2, wobei die Leitung zumindest teilweise seitlich offen ist.

4. Kupplungsträger (500) nach dem vorhergehenden Anspruch, wobei mindestens ein radialer Verlängerungsabschnitt (720) der Leitung seitlich offen ist.

5. Kupplungsträger (500) nach einem der vorhergehenden Ansprüche, wobei der ringförmige Abschnitt zum Inneren des Kupplungsträgers (500), d. h. zu einer Längsachse des Kupplungsträgers, hin offen ist.

6. Kupplungsträger (500) nach einem der vorhergehenden Ansprüche, wobei der ringförmige Abschnitt der Leitung in einem axialen Verlängerungsabschnitt des Kupplungsträgers angeordnet ist.

7. Kupplungsträger (500) nach einem der vorhergehenden Ansprüche, der zumindest teilweise aus einem Material hergestellt ist, das ausgewählt ist aus: Stahl, Aluminium, einem gesinterten Material, einem Kunststoffmaterial.

8. Kupplungsträger (500) nach einem der vorhergehenden Ansprüche, der aus einem Stück gefertigt ist.

9. Kupplungsträger (500) nach einem der Ansprüche 1 bis 7, der aus mindestens zwei Teilen gefertigt ist.

10. Kupplungsträger (500) nach dem vorhergehenden Anspruch mit einem Stützlager (113) insbesondere zur radialen Abstützung der ersten (100) und zweiten (200) Kupplung.

11. Kupplungslager nach dem vorhergehenden Anspruch, wobei das Stützlager (113) vom Typ Schräglager ist.

12. Verbund (900) eines Trägers nach einem der vorhergehenden Ansprüche und eines Befestigungsorgans (600).

13. Kupplungsmodul (10) mit:
- einer ersten Kupplung (100), die sich um die Achse (O) dreht;
- einer zweiten Kupplung (200), die sich um die Achse (O) dreht;
- einem Kupplungsträger (500) nach einem der Ansprüche 1 bis 9;
- einem Befestigungsorgan (600) für das Kupplungsmodul.

14. Doppelkupplungsmechanismus mit einem Kupplungsmodul nach dem vorhergehenden Anspruch und einem Betätigungssystem, das Folgendes aufweist:
- einen ersten Aktuator, der so angeordnet ist, dass er sich axial bewegt, um die erste Kupplung ein- oder auszukuppeln;
- einen zweiten Aktuator, der so angeordnet ist, dass er sich axial bewegt, um die zweite Kupplung ein- oder auszukuppeln;
- ein Gehäuse (307), das den ersten und den zweiten Aktuator aufnimmt, wobei das Gehäuse einen Kanal (800) aufweist, der es einer Hydraulikflüssigkeit ermöglicht, zu fließen, wobei der Kanal (800) so angeordnet ist, dass er mit der Leitung (700) zusammenwirkt, um eine Flüssigkeitszirkulation der Hydraulikflüssigkeit zwischen der Leitung (700) und dem Kanal (800) zu ermöglichen.

15. Doppelkupplungsmechanismus nach dem vorhergehenden Anspruch, wobei der Kanal (800) einen axialen Verlängerungsabschnitt (810) aufweist, der so angeordnet ist, dass er mit der Leitung (700) zusammenwirkt.

## Claims

1. Clutch support (500) designed to support at least one first clutch (100, 200),
said support delimiting a duct (700) having at least one outlet orifice (725) allowing a hydraulic fluid to circulate from an actuating system (300) towards the at least one first clutch and comprising at least one radial-extension part (720),
**characterized in that** the duct (700) further comprises an annular part (750), the actuating system (300) comprising a passage (800) designed to cooperate with the duct (700) in order to allow fluidic circulation of the hydraulic fluid between the duct (700) and the passage (800).

2. Clutch support (500) according to Claim 1, the duct comprising a plurality of inlet orifices (723) and/or a plurality of outlet orifices (725), said inlet orifices (723), or respectively outlet orifices (723), preferably being uniformly angularly distributed about a longitudinal axis O of the clutch support.

3. Clutch support (500) according to Claim 1 or 2, the duct being at least partially open laterally.

4. Clutch support (500) according to the preceding claim, at least one radial-extension part (720) of the duct being open laterally.

5. Clutch support (500) according to any one of the preceding claims, the annular part being open towards the inside of the clutch support (500), namely towards a longitudinal axis of the clutch support.

6. Clutch support (500) according to any one of the preceding claims, the annular part of the duct being situated in an axial-extension part of the clutch support.

7. Clutch support (500) according to any one of the preceding claims, being produced at least in part from a material chosen from: steel, aluminium, a sintered material, a plastics material.

8. Clutch support (500) according to any one of the preceding claims, being produced in a single piece.

9. Clutch support (500) according to any one of Claims 1 to 7, being produced in at least two parts.

10. Clutch support (500) according to the preceding claim, comprising a support bearing (113) in particular for radially supporting the first (100) and second (200) clutches.

11. Clutch support according to the preceding claim, the support bearing (113) being of the angular contact bearing type.

12. Assembly (900) of a support according to any one of the preceding claims and of a fixing member (600).

13. Clutch module (10) comprising:
- a first clutch (100) rotating about the axis (O);
- a second clutch (200) rotating about the axis (O);
- a clutch support (500) according to any one of Claims 1 to 9;
- a fixing member (600) for fixing the clutch module.

14. Dual-clutch mechanism comprising a clutch module according to the preceding claim and an actuating system comprising:
- a first actuator designed to move axially in order to engage or disengage the first clutch;
- a second actuator designed to move axially in order to engage or disengage the second clutch;
- a casing (307) housing the first and second actuators, said casing comprising a passage (800) allowing a hydraulic fluid to circulate, said passage (800) being designed to cooperate with the duct (700) in order to allow fluidic circulation of the hydraulic fluid between the duct (700) and the passage (800).

15. Dual-clutch mechanism according to the preceding claim, the passage (800) comprising an axial-extension part (810) designed to cooperate with the duct (700).
